(19)

Europäisches
Patentamt
European
Patent Office
Office européen
des brevets

(11) **EP 3 389 405 B1**

(12) **EUROPEAN PATENT SPECIFICATION**

(45) Date of publication and mention
of the grant of the patent:
**17.01.2024   Bulletin 2024/03**

(21) Application number: **16816627.0**

(22) Date of filing: **13.12.2016**

(51) International Patent Classification (IPC):
**A23L 33/00** (2016.01)    **A23L 33/12** (2016.01)
**A23L 33/19** (2016.01)    **A23L 33/21** (2016.01)

(52) Cooperative Patent Classification (CPC):
**A23L 33/40; A23L 33/12; A23L 33/19; A23L 33/21**

(86) International application number:
**PCT/EP2016/080758**

(87) International publication number:
**WO 2017/102705 (22.06.2017 Gazette 2017/25)**

(54) **NUTRITIONAL COMPOSITIONS AND INFANT FORMULAS CONTAINING RELATIVELY HIGH LEVEL OF OLIGOFRUCTOSE FOR INDUCING GUT MICROBIOTA PATTERNS CLOSE TO THOSE OF HUMAN MILK FED INFANTS**

ERNÄHRUNGSZUSAMMENSETZUNGEN UND SÄUGLINGSFORMULIERUNGEN MIT EINEM RELATIV HOHEN GEHALT AN OLIGOFRUCTOSE ZUR INDUKTION VON DARMMIKROBIOTAMUSTERN IN DER NÄHE DERJENIGEN VON SÄUGLINGEN, DIE MIT MENSCHLICHER MILCH GEFÜTTERT WERDEN

COMPOSITIONS NUTRITIONNELLES ET LAITS MATERNISÉS CONTENANT UNE TENEUR RELATIVEMENT ÉLEVÉE EN OLIGOFRUCTOSE POUR INDUIRE DES MODÈLES DE MICROBIOTE INTESTINAL PROCHES DE CEUX DES NOURRISSONS NOURRIS AU LAIT HUMAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.12.2015   US 201562269261 P**

(43) Date of publication of application:
**24.10.2018   Bulletin 2018/43**

(73) Proprietor: **Société des Produits Nestlé S.A. 1800 Vevey (CH)**

(72) Inventors:
- **BERGER, Bernard 1613 Maracon (CH)**
- **FRANTZ, David Jeffersonville PA 19403 (US)**
- **WERNIMONT, Susan US - Lawrence, KS 66049 (US)**
- **YAO, Manjiang Chester Springs PA 19425 (US)**

(74) Representative: **Strych, Sebastian Mitscherlich PartmbB Patent- und Rechtsanwälte Karlstraße 7 80333 München (DE)**

(56) References cited:
**WO-A1-2016/207061      US-A1- 2013 289 110 US-A1- 2014 323 574**

- **MANJIANG YAO ET AL: "Effects of Term Infant Formulas Containing High sn-2 Palmitate With and Without Oligofructose on Stool Composition, Stool Characteristics, and Bifidogenicity", JOURNAL OF PEDIATRIC GASTROENTEROLOGY AND NUTRITION, vol. 59, no. 4, 1 October 2014 (2014-10-01), pages 440-448, XP055349795, US ISSN: 0277-2116, DOI: 10.1097/MPG.0000000000000443**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **BOSSCHER D ET AL: "Inulin and oligofructose as prebiotics in the prevention of intestinal infections and diseases", NUTRITION RESEARCH REVIEWS, CAMBRIDGE UNIVERSITY PRESS, CAMBRIDGE, GB, vol. 19, no. 2, 1 December 2006 (2006-12-01), pages 216-226, XP002751592, ISSN: 0954-4224, DOI: 10.1017/S0954422407249686 [retrieved on 2007-02-22]**

## Description

### Field of the Invention

The present invention relates to nutritional compositions for infants and young children and their health effects in infants. In particular, it relates to infant formula comprising a relatively high amount of oligofructose and a relatively high amount of high *sn*-2 palmitate triglycerides.

### Background to the Invention

Whenever mothers cannot breast-feed their infants, infant formula provides a suitable alternative to natural breast feeding with human breast milk. Nutritional compositions for infants and young children are often sold as powders to be reconstituted with water or in some instances as ready to drink or concentrated liquid compositions. Those compositions are intended to cover most or all the nutritional needs of the infants or young children.

It is known, however, that human breast milk represents the ultimate gold standard in terms of infants' nutrition. Infant formula manufacturers have made many attempts to induce nutritional health effects close to or similar to the benefits of human breast milk.

Mother's milk is recommended for all infants. However, in some cases, breast feeding is inadequate or unsuccessful for medical reasons or the mother chooses not to breast feed. Infant formulae have been developed for these situations. Fortifiers have also been developed to enrich mother's milk or infant formula with specific ingredients.

In many instances, studies have shown that infant formula does not induce the identical effects on the body compared to human breast milk. For example, infants fed infant formula and infants fed human breast milk (HBM) can exhibit a different intestinal microbiota.

Infancy, especially the first weeks, 3 months, 6 months or 12 months of life, is critical for the establishment of a balanced gut microbiota.

It is known that the modulation of the gut microbiota during infancy can prospectively have a great influence in the future health status of the bodies. For example, the gut microbiota can have an influence on the development of obesity later in life, on the development of a strong immune system later in life or on normal growth. Other long term effects have also been evidenced or described.

A healthy intestinal microbiota is an indicator of the health of an infant and altered intestinal microbiota can be an indicator (and/or a cause) of abnormal health events such as diarrhoea, under-absorption of nutrients, colic, altered sleep, and altered growth and development.

It is known that the mode of delivery can affect the initial gut microbiota of infants: infants delivered by Caesarean section (C-section) have been shown to have a different gut microbiota compared to vaginally-delivered infants.

It is known that, among other ingredients, non-digestible carbohydrates (prebiotics) in particular can affect the promotion of particular microbiota. For example, it has been shown that certain galacto-oligosaccharides (GOS) and/or certain fructo-oligosaccharides (FOS) can promote the growth and prevalence of bifidobacteria in the gut, especially in infants.

The gut microbiota and its evolution during the development of the infant is, however, a fine balance between the presence and prevalence (amount) of many populations of gut bacteria. Some gut bacteria are classified as "generally positive" while others are "generally negative" (or potentially or known pathogenic bacteria) in relation to their effect on the overall health of the infant.

Certain species of bacteria, such as bifidobacteria, may be under-represented in infants fed conventional infant formula in comparison to breast fed infants. Similarly some bacterial populations are considered potentially or known pathogenic and should remain of low prevalence in the gut microbiota.

Indeed infants fed infant formulae may not benefit from the natural, well-balanced intestinal gut microbiota of infants fed exclusively or predominantly human breast milk. Such natural microbiota observed in breast fed infants is indeed both well controlled over time (evolution over time) and very complex. Many taxa of microorganisms co-exist in the highly complex microenvironment of the gut/intestine, each in sequentially defined proportions. Quantitative and qualitative dimensions are to be considered when defining the microbiota of infants or young children. Furthermore, the variation over time of the gut microbiota adds to the complexity. Indeed the fine balance of all the families, genus, species and strain of bacteria present in each location of the gastrointestinal tract as well as its variation over time, all contribute to the "gastro-intestinal health" of the infants and young children. While it is recognized that the "gastro-intestinal health" of infants fed human breast milk (HBM) represent a target, little is known on how to promote the gut microbiota of infant-formula-fed infants to mimic the composition and diversity in the gut microbiota of HBM-fed infants.

While many studies have identified ways to promote the growth and prevalence of specific positive bacteria or bacterial groups in the gut of infants, little is known about ways to induce an overall microbiota that resembles the one of breast-fed infants, in its full composition and diversity.

There is a need, for infants fed with infant formula, to promote and/or induce an overall microbiota that is close to the microbiota of breast-fed infants.

There is a need, for infants fed with infant formula, to promote and/or induce an overall microbiota that is close in its composition and diversity to that of breast-fed infants, at the species, genus, families, orders, classes and/or phylum levels.

There is a need, for infants fed with infant formula, to promote and/or induce an bacterial community that is close to that of breast-fed infants, especially phylogenetically close.

There is a need, for infants fed with infant formula, to promote and/or induce over time a microbiota that evolves in a similar manner as the microbiota of breast-fed infants.

There is also a need, for infants fed with infant formula, to provide them with optimal nutrition to support the development of a microbiota close to the microbiota of breast-fed infants, both during the provision of the nutritional intervention (short term) and/or after the provision of the nutritional intervention has ceased (longterm).

There is a need, for infants fed with infant formula, to induce an optimal short term or long term health status through a nutritional intervention inducing and/or promoting the development of a microbiota close/similar to the microbiota of breast-fed infants; such health status includes an optimum growth over time, and an optimal development of the immune system, as well as the prevention of metabolic disorders.

There is a need to compensate for the sub-normal microbiota observed in non-breast-fed infants. There is a need to rebalance such microbiota.

There is a need to promote a healthy microbiota in infants that are not fed or non-exclusively fed with Human Breast Milk. There is particularly a need for those infants or young children suffering from non-balanced microbiota, and even more for those suffering from health conditions affecting their gut microbiota (for example during/after infections, after a period of malnutrition, after diarrhoea episodes, populations of C-section infants, etc....).

There is a need, for infants fed with infant formula, to induce and/or promote the development of specific bacterial classes, orders, families, genus, species or strains in their intestine, so as to obtain a microbiota close to the microbiota of breast-fed infants.

There is a need, for infants fed with infant formula, to repress and/or down-regulate the development of specific bacterial classes, orders, families, genus or species or strains in their intestine, so as to obtain a microbiota close to the microbiota of breast-fed infants.

There is a need to down-regulate the development and growth of potentially or known pathogenic bacteria or "negative bacteria" in the guts of infants and young children.

There is a need to selectively affect or reduce the growth of potentially or known pathogenic bacteria in the guts of infants and young children while promoting or at least not impacting the growth of potentially or known positive gut bacteria. There is a need to induce a low diversity of the microbiota, as observed in breast-fed infants.

There is a need to enhance a good balance in the overall gut microbiota of infants, especially by down-regulating or repressing the growth of potentially or known pathogenic bacteria, during the first weeks of life when such a balance is being established.

There is a need to enhance such good balance by well tolerated, "soft-impact" means having no or little side effects.

There is a need to reduce or suppress the growth of potentially or known pathogenic bacteria in the guts of infants and young children.

There is a need to negatively impact the growth of potentially or known pathogenic bacteria and promote the growth of potentially or known beneficial bacteria in the guts of infants and young children, for example, while avoiding the promotion of hard stools, cramps and colic.

WO2013068879A2, by Manjiang Yao et al., published on May 16 2013, reports the effect of high sn-2 palmitate diets (in presence or absence of oligofructose) on the stools softness and on the induction of positive bacteria such as bifidobacteria in infants. The document remains however silent on the overall composition and diversity of the gut flora.

Yao et al., 2014, describes the effects of term infant formulas containing high sn-2 palmitate with and without oligofructose on stool composition, stool characteristics, and bifidogenicity.

Bosscher et al., 2006, discloses inulin and oligofructose as prebiotics in the prevention of intestinal infections and diseases.

WO 2016/207061 is a document according to Art. 54(3) EPC and discloses nutritional compositions for infants and young children and their health effects in infants.

US 2013/0289110 A1 relates to a method of promoting development of gut flora in a subject, specifically beneficial gut flora, comprising administering to the subject an edible lipid composition comprising a vegetable-derived fat source, wherein the fat source comprises triglycerides with 15-55% palmitic acid moieties out of the total fatty acids, and wherein the level of palmitic acid moieties at the sn-2 position of the glycerol backbone is at least 30% of total palmitic acid.

**Summary of the invention**

The invention relates to a nutritional composition according to claim 1. Preferably the composition is in a powdered form. The composition comprises high *sn*-2 palmitate.

The composition promotes or induces a gut microbiota that is closer to the microbiota of those of infants fed exclusively with human breast milk (so-called exclusively breast

fed infants), in comparison to infants fed predominantly with conventional infant formula not comprising the composition of the invention.

The infants or young children can be between 0 and 36 months, preferably between 0 and 12 months of age.

The composition of the invention has the effect of down-regulating, decreasing or inhibiting the growth as well as reducing the abundance of potentially or known pathogenic bacteria and/or promoting the abundance of beneficial bacteria (e.g. Bifidobacteria) and/or inducing a microbiota that is less diverse, in the gut of infants or young children.

**Brief Description of the Figures**

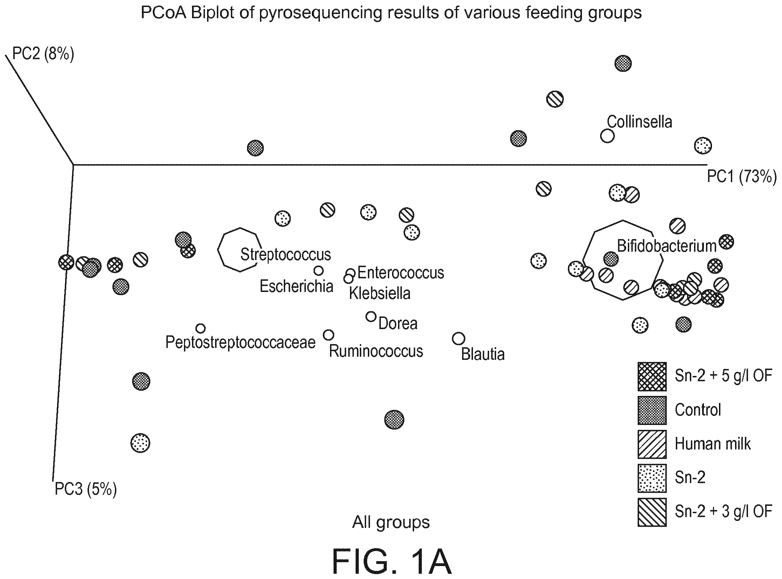

**Figures 1 A-D** illustrate the effect of various nutritional compositions on the microbiota of infants. It shows the relative importance of various groups of bacteria when mapped along 3 axes. The coordinates of the six most abundant bacterial genera (weighted average of the relative abundance in all samples) is indicated by grey bubbles.

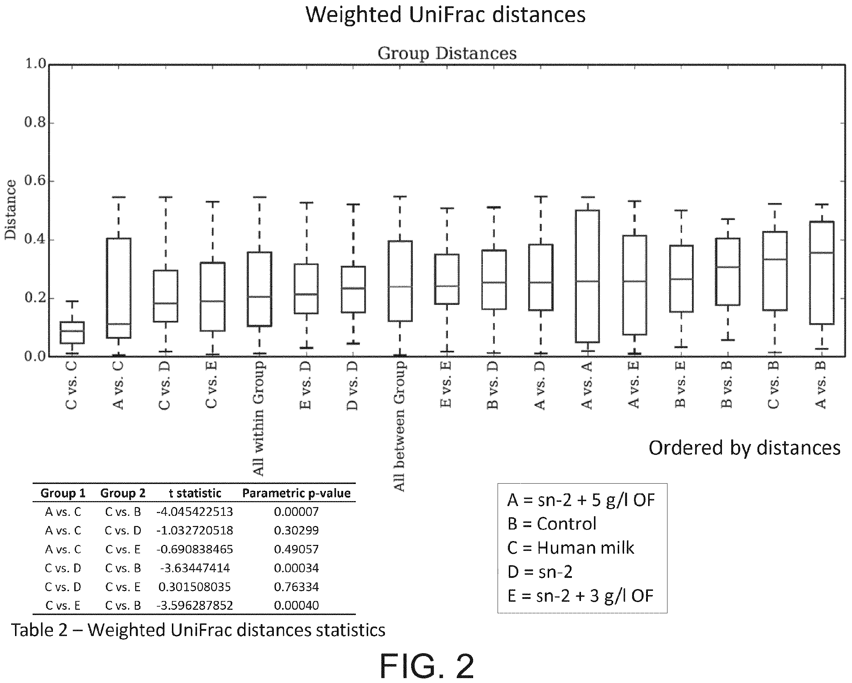

**Figure 2 and Table 2:** Figure 2 illustrates the average phylogenetic distances of the bacteria communities from one group to another, by feeding group using weighted Unifrac distance calculation. Median distance is shown with the boxes encompassing the interquartile range, and the whiskers showing the range. Table 2 shows the statistical significance of the differences of distribution of the distances in Fig 2 (t-test).

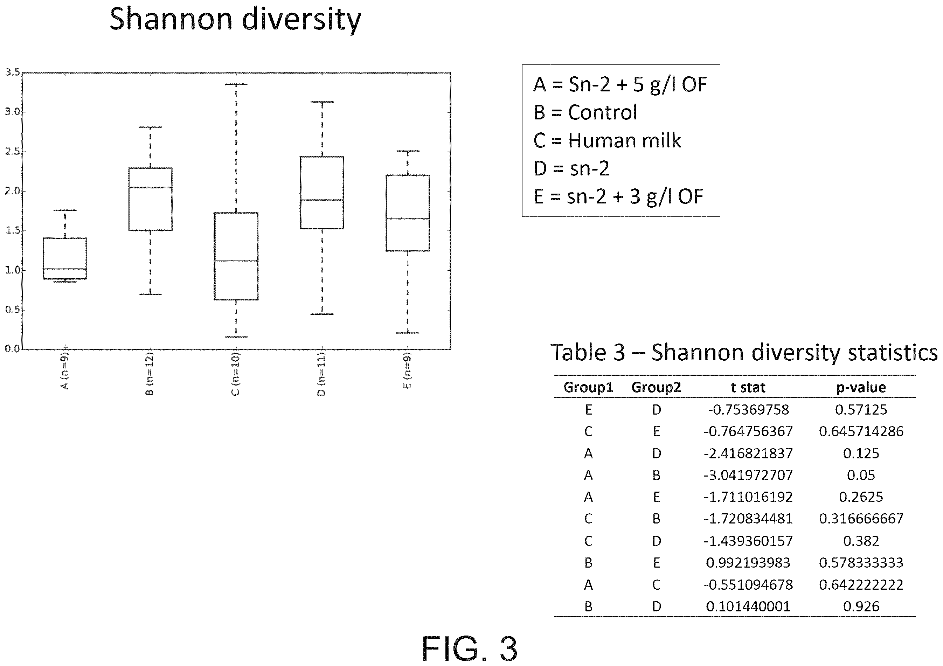

**Figure 3 and Table 3:** Figure 3 illustrates the diversity of the microbiota from one group to another, by feeding group, using Shannon diversity index calculated per sample. Median diversity is shown with the boxes encompassing the interquartile range, and the whiskers showing the range. Table 3 illustrates the significance of the differences of distribution of diversity in Fig 3 (t-test).

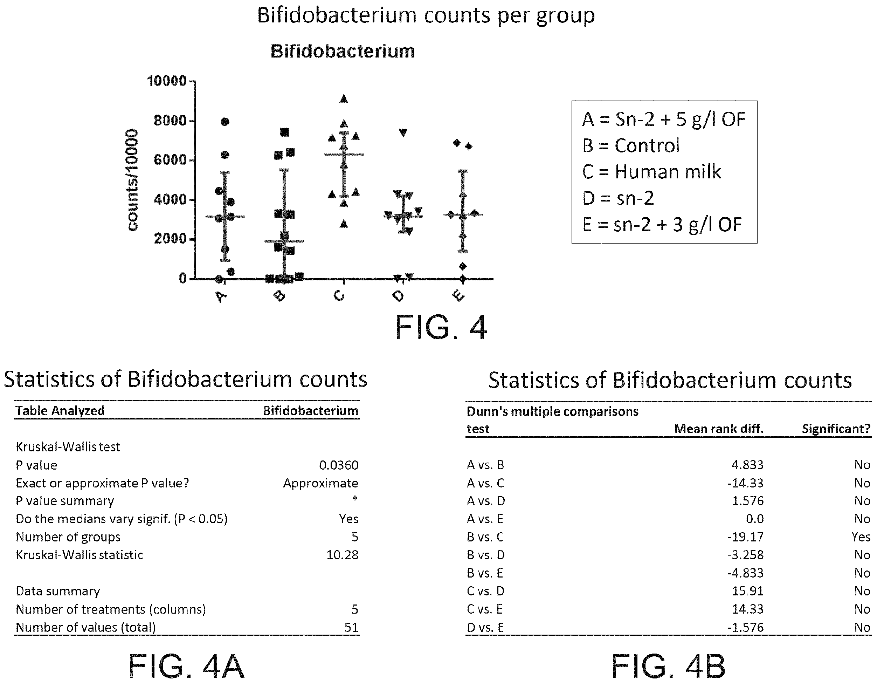

**Figure 4 and Tables 4A-B:** Figure 4 illustrates the relative abundance of Bifidobacteria in each group, by feeding group. Median diversity is shown with the whiskers encompassing the interquartile range. Tables 4A and 4B shows the statistical significance of the differences in the amount of Bifidobacterium in each group (Kruskal-Wallis test with Dunn's multiple comparisons test).

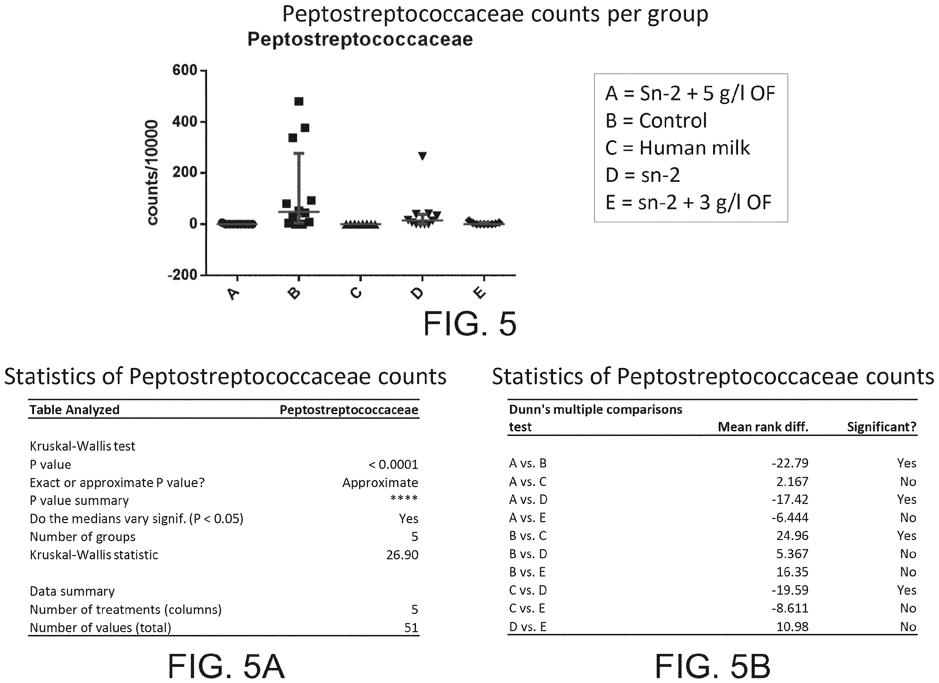

**Figure 5 and Table 5A-B:** Figure 5 illustrates the relative abundance of Peptostreptococcaceae (example of a potentially pathogenic bacteria group) in each group, by feeding group. Median diversity is shown with the whiskers encompassing the interquartile range. Tables 5A and 5B illustrates the statistical significance of the differences in the amount of Peptostreptococcaceae in each group (Kruskal-Wallis test with Dunn's multiple comparisons test).

**Description of the invention**

**Definitions:**

As used herein, the following terms have the following meanings. The term "infant" means a child under the age of 12 months.

The expression "young child" means a child aged between one and three years, also called toddler.

An "infant or young child born by C-section" means an infant which was delivered by caesarean section. It means that the infant was not vaginally delivered.

A "preterm" or "premature" means an infant or young child that was not born at term. Generally it refers to an infant born prior to 36 weeks of gestation.

The expression "nutritional composition" means a composition which nourishes a subject. This nutritional composition is usually to be taken enterally, orally, parenterally or intravenously, and it usually includes a lipid or fat source and a protein source. Preferably, a nutritional composition is for oral use.

The expression "hypoallergenic nutritional composition" means a nutritional composition which is unlikely to cause allergic reactions.

The expression "synthetic composition" means a mixture obtained by chemical and/or biological means, which can be chemically identical to the mixture naturally occurring in mammalian milks.

The expression "infant formula" means a foodstuff intended for particular nutritional use by infants during the first four to six months of life and satisfying by itself the nutritional requirements of this category of person (Article 1.2 of the European Commission Directive 91/321/EEC of May 14, 1991 on infant formulae and follow-on formulae).

The expression "starter infant formula" means a foodstuff intended for particular nutritional use by infants during the first four months of life.

The expression "follow-on formula" means a foodstuff intended for particular nutritional use by infants aged over four months and constituting the principal liquid element in the progressively diversified diet of this category of person.

The expression "baby food" means a foodstuff intended for particular nutritional use by infants during the first years of life.

The expression "fortifier" refers to liquid or solid nutritional compositions suitable for mixing with breast milk or infant formula.

The term "weaning period" means the period during which the mother's milk is substituted by other food in the diet of an infant.

The "mother's milk" should be understood as the breast milk or colostrum of the mother (= Human Breast Milk = HBM).

The term "oligofructose" as used herein refers to a fructose oligomers. It can be long chain or short chain , depending on the degree of polymerization of the oligofructose (number of monomers). Preferably the oligofructose of the invention is a short-chain oligofructose, most preferably it has a degree of polymerization of from 2 to 10, for example a degree of polymerization of from 2 to 8.

The term "*sn*-2 palmitate" as used herein refers to palmitic acid in the *sn*-2 position of the triglyceride to which it is bonded.

"High *sn*-2 palmitate triglyceride" (or "high *sn*-2 palmitate") refers to a triglyceride (TG) containing more than 33% of the palmitic acids in the *sn*-2 position. For example a commercially available high *sn*-2 palmitate ingredient is sold by Lipid Nutrition is Betapol™ B-55. It is a triglyceride mixture derived from vegetable oil in which at least 54% of the palmitic acid is in the *sn*-2 position of the glycerol molecule.

"Alpha-Lactalbumin" refers to a high-quality, easy-to-digest whey protein that comprises 20-25% of total human breast milk (HBM) protein and is the primary protein found in HBM. The structure of alpha-lactalbumin is comprised of 123 amino acids and 4 disulfide bridges and the protein has a molecular weight of 14.2K Daltons. Alpha-lactalbumin is ideal for lower protein infant formulas due to its high content of essential amino acids, particularly tryptophan.

The term "prebiotic" means non-digestible carbohydrates that beneficially affect the host by selectively stimulating the growth and/or the activity of healthy bacteria such as bifidobacteria in the colon of humans (Gibson GR, Roberfroid MB. Dietary modulation of the human colonic microbiota: introducing the concept of prebiotics. J Nutr. 1995;125:1401-12).

The term "probiotic" means microbial cell preparations or components of microbial cells with a beneficial effect on the health or well-being of the host. (Salminen S, Ouwehand A. Benno Y. et al. "Probiotics: how should they be defined" Trends Food Sci. Technol. 1999:10 107-10). The microbial cells are generally bacteria or yeasts.

The term "cfu" should be understood as colony-forming unit.

All percentages are by weight unless otherwise stated.

The invention will now be described in further details. It is noted that the various aspects, features, examples and embodiments described in the present application may be compatible and/or combined together.

In addition, in the context of the invention, the terms "comprising" or "comprises" do not exclude other possible elements. The composition of the present invention, including the many embodiments described herein, can comprise, consist of, or consist essentially of the essential elements and limitations of the invention described herein, as well as any additional or optional ingredients, components, or limitations described herein or otherwise depending on the needs.

## Detailed description of the invention

Typically, an infant formula in a ready-to-consume liquid form (for example reconstituted from a powder) provides 60-70 kcal/100 ml. Infant formula typically comprises, per 100 Kcal: about 1.8-4.5 g protein; about 3.3-6.0 g fat (lipids); about 300- 1200 mg linoleic acid; about 9-14 g carbohydrates selected from the group consisting of lactose, sucrose, glucose, glucose syrup, starch, maltodextrins and maltose, and combinations thereof; and essential vitamins and minerals. Lactose may be the pre-dominant carbohydrate in an infant formula. For example, a liquid infant formula may contain about 67 kcal/100 ml. In some embodiments, infant formula may comprise about 1.8-3.3 g protein per 100 Kcal. Infant formula may be in the form of a powder which can be reconstituted into a ready-to-feed liquid by adding an amount of water that results in for example a liquid having about 67 kcal/100 ml.

An infant formula may also comprise nucleotides selected from cytidine 5'-monophosphate (CMP), uridine 5'-monophosphate (UMP), adenosine 5'-monophosphate (AMP), guanosine 5'-monophosphate (GMP) and inosine 5'-monophosphate (IMP), and mixtures thereof. Infant formula may also comprise lutein, zeaxanthin, fructo-oligosaccharides, galacto-oligosaccharides, sialyl-lactose, and/or fucosyl-lactose. Long chain polyunsaturated fatty acids, such as docosahexaenoic acid (DHA) and arachidonic acid (AA) may be included in infant formula. Infant formula may also include free amino acids. Infant formula may also include other ingredients well-known in the art.

In one embodiment, the infant formula of this invention comprises about 5-6 g per 100 kcal of fat (triglycerides), with at least 8 wt% of this fat consisting of palmitic acid in the *sn*-2 position of a triglyceride. In some embodiments about 8.0-11.5 wt%, about 8.5-11.0% or about 9.0-10.0 wt% of the fat is palmitic acid in the *sn*-2 position of a triglyceride.

In some embodiments, palmitic acid comprises from about 15 to about 25%, such as from about 15 to about 20%, of the total fatty acids content of the formula, by weight, and at least from about 33%, for example, from about 35 to about 43% of the total palmitic acid content is in the *sn*-2 position.

In some embodiments, the infant formula further comprises at least one omega 6 fatty acid and at least one omega 3 fatty acid in a ratio of about 6 to about 1. In one embodiment, at least one omega 6 fatty acid comprises from about 10 to about 15% by weight of the total fatty acids and at least one omega 3 fatty acid comprises from about 1.2% to about 3.6% of the total fatty acids. In some embodiments, the infant formula comprises at least one omega 6 fatty acid present from about 2 to about 4% of the total weight and at least one omega 3 fatty acid present from about 0.3% to about 0.6% of the total weight.

The fat in the infant formula of this invention comprises a variety of triglycerides typically found in milk and/or infant formula. The most common fatty acid residues in the triglycerides are palmitic and oleic acids. Fatty acid residues in addition to oleic and palmitic acids that are present include, but are not limited to linoleic acid, alpha linolenic acid, lauric acid, myristic acid, docosahexaenoic acid, and arachidonic acid.

Recent infant clinical studies have shown that nutritional formulas containing at least one omega 6 fatty acid and at least one omega 3 fatty acid in a ratio of from about 6 to about 1 increased DHA accretion in erythrocytes and plasma. A balanced ratio of about 6:1 of omega 6 fatty acid to omega 3 fatty acid may also provide long term health benefits including protection against cardiovascular disease. Such balance will be achieved by formulating the present invention with vegetable oil fat sources that have omega 6 fatty acid content, such as, for example, soybean oil and sunflower oil, and omega 3 fatty acid content, for example, rapeseed, canola, flaxseed, chia, perlla or walnuts. A unique fat blend with 5 different oils will be used to achieve the modified fat blend

In one embodiment, the infant formula of this invention comprises from about 1.8 to about 2.2 g of total protein per 100 kcal, for example, about from 1.8 to about 2.1 g or from about 1.9 to about 2.1 g protein per 100 kcal, wherein from about 0.3 to about 0.4 g/100 kcal of protein is alpha-lactalbumin. The infant formula of this invention may be in the form of a ready-to-feed liquid, or may be a liquid concentrate or powdered formula that can be reconstituted into a ready-to-feed liquid by adding an amount of water that results in a liquid having about 67 kcal/100 ml. The infant formula of this invention includes all the ingredients that are required by law in the US or EU, including but not limited to certain vitamins, minerals, and essential amino acids. It may also include nucleotides, such as CMP, UMP, AMP, GMP and IMP, lutein, zeaxanthin, and other ingredients known in the art.

**Oligofructose (OF)**

The infant formula of this invention comprises at least 0.6 g or at least 0.7 g of oligofructose per 100 kcal of the composition. In some embodiments, it contains from about 0.6 to about 0.7 g, from about 0.7 to about 0.8 g, or from about 0.7 to about 0.9 g, oligofructose per 100 kcal.

In some embodiments the oligofructose has a degree of polymerization of from 2 to 10. At least 90%, 95%, 99% or 100% of the oligofructose has a degree of polymerization of from 2 to 8 (between 2 and 8).

In one embodiment the composition of the invention comprises

- at least 5 g / L or at least 4 g/L of Oligofructose (OF) when the composition is a ready-to-drink liquid composition, or

- a sufficient amount of oligosaccharide to obtain respectively at least 4 g/L or at least 5g/L of oligofructose in the reconstituted composition when said nutritional composition is a powered or concentrated composition.

In some embodiments the nutritional composition of the invention comprises at least 0.6 g OF /100 kcal of composition or at least 0.7 g, or at least 0.75g, or at least 0.8 g or at least 0.9 g OF /100 kcal of composition.

It is generally admitted, in view of the results illustrated by the examples, that a high amount of oligofructose delivers a stronger effect. A upper limit for a beneficial effect of oligofructose may; however, exist when disadvantageous side effect begins. Such upper limit may be for example 2.0g / 100kcal, 1.8 g /100kcal, 1.5 g /100kcal, or 1.2 g /100kcal . Preferably the composition of the invention comprises 5 g OF / L or 0.75 or 0.9 g OF/100kcal of composition or at last such amounts.

Experimental evidences show that a level of OF at or below 3 g/L or at or below 0.4 g /100kcal does not or may only partially induce the desirable effects of the invention.

**Other oligosaccharides** :

Other oligosaccharides (than OF) can be also used in the context of the invention. In one preferred embodiment the other oligosaccharides are mixtures of sialylated oligosaccharides and GOS.

In one embodiment the mixture of (other) oligosaccharides comprises N-acetylated oligosaccharides, Galacto-oligosaccharides (GOS), and Sialylated oligosaccharides.

In one embodiment the composition comprises:

- N-acetylated oligosaccharides between 0.001 to 1 wt%, preferably between 0.003 wt% and 0.3 wt%

- Galacto-oligosaccharides between 1 and 10wt%, preferably between 3 and 6 wt%

- Sialylated oligosaccharides between 0.005 and 1 wt%, preferably between 0.01 and 0.4 wt%

**Health Effect**

The composition of the invention has a positive effect on the microbiota of the subject infants or young children. Such positive effect is characterized by the down regulation, decrease or inhibition of growth of potentially or known pathogenic bacteria while also promoting the growth of beneficial bacteria. Such bacteria can be naturally localized in the gut or can have an exogenous origin.

Such changes to the growth can be measured, for example, by the analysis of the stools. Such changes to the growth can be measured preferably at 4 weeks, 8 weeks, 12 weeks, 16 weeks, or 24 weeks of age. Such changes to the growth can, for example, be evaluated by comparison to the gut microbiota of infants fed a conventional nutritional composition (e.g. infant formula) not comprising the oligofructose present in the invention.

Importantly the changes observed induce the maintaining of a low diversity of the gut microbiota.

The composition of the invention has an overall effect on a vast variety of gut bacteria. In various embodiments of the invention, the changes to the abundance is particularly effective (visible/measurable) on Bifidobacterium and/or Peptostreptococcaceae, as well as the global bacterial community measures (see Figures).

By modulating (down-regulating, decreasing and/or inhibiting and/or up-regulating or promoting) the growth of populations of potentially or known pathogenic and/or beneficial bacteria, respectively, the composition of the invention provides positive health effects and contributes to the induction and maintenance of a healthy intestinal microbiota. Such a healthy gut / intestinal microbiota is ultimately linked to proper nutrient absorption, adequate growth, less colic, less diarrhoea and the best gut health.

The microbiota induced is specific around 2 dimensions : Quantitatively the gut flora comprises more beneficial bacteria and less non-beneficial or detrimental bacteria. Qualitatively the diversity of the bacterial community resemble more to a microbiota of breast-fed infants.

The effect of the invention can be preventive (for example avoiding the imbalance of the gut microbiota, avoiding gut infections, maintaining a healthy intestinal microbiota, inducing a healthy intestinal microbiota) or curative (restoring a healthy gut microbiota when it is impaired, helping eliminate or decrease potentially or known pathogenic populations in the gut / intestine, inducing a healthy microbiota after impairments due, for example, to diarrhoea or infections). By down-regulating, decreasing and/or inhibiting the growth of populations of potentially or known pathogenic bacteria, and/or inducing more beneficial bacteria, qualitatively and quantitatively, the composition of the invention provides positive health effects. Such a healthy gut / intestinal microbiota is ultimately linked to proper nutrient absorption, adequate growth, less colic, less infection, less diarrhoea and the best gut health.

In one embodiment the composition of the invention is characterized in that the health effect observed on the microbiota (i.e. modulating - down-regulating, decreasing and/or inhibiting of potentially or known pathogenic bacteria and/or up-regulating or promoting potentially or known beneficial bacteria in the gut of infants or young children) further induces the gut microbiota to be similar or more similar to the microbiota of exclusively breast-fed infants or young children (when compared to the microbiota of infants fed from a conventional composition - i.e. a composition not containing the essential features of the invention, for example not containing oligofructose). It is understood that inducing a gut microbiota which resembles / is similar to the gut microbiota of breast fed infants is beneficial as human breast milk represents the gold standard of nutrition for infants.

In one embodiment of the invention the terms "promoting or inducing a gut microbiota that is closer to the microbiota of infants fed exclusively with human breast milk" means that the composition induces the promotion of the growth of beneficial bacteria, such as bifidobacteria, and/or the down-regulation of growth of the potentially or known pathogenic bacteria.

According to the invention the terms "promoting or inducing a gut microbiota that is closer to the microbiota of infants fed exclusively with human breast milk" means that the composition induces decreasing of the microbiota diversity such as to renders it closer to the microbiota of infants fed exclusively with human breast milk, in comparison to the microbiota of infants fed predominantly with a conventional nutritional composition not comprising said oligofructose in said amount,

In one embodiment of the invention the terms "promoting or inducing a gut microbiota that is closer to the microbiota of infants fed exclusively with human breast milk" means that the composition induces reducing the phylogenetic and/or taxonomic distance to the microbiota of exclusively breast fed infants such as to render it closer to the microbiota of infants fed exclusively with human breast milk, in comparison to the microbiota of infants fed predominantly with a conventional nutritional composition not comprising said oligofructose in said amount,

The phylogenetic distance can be measured by the by weighted UniFrac method, as described in the literature.

The taxonomic distance can be measured by a Bray-Curtis distance based on genus level profiles, as described in the literature.

The health effect related to the infant can be measured by various methods as illustrated in the example below. In one embodiment however the microbiota effect is measured by the average distribution of the UniFrac distances to the breast-fed reference group (see below).

In one embodiment the health effect "promoting or inducing a gut microbiota that is closer to the microbiota of infants fed exclusively with human breast milk" is further characterized by promoting or inducing a gut microflora that has a phylogenetic distance to the microbiota of breast fed infants of less than 0.3 units (measured by weighted UniFrac method), preferably less than 0.25 units, or less than 0.2 units.

The diversity of the gut microbiota can be measured by the "Shannon index", as known in the scientific literature. The composition of the invention may induce a diversity of the microbiota of less than 1.8, preferably less than 1.5, more preferably less than 1.3, as measured by the Shannon diversity index.

In one embodiment of the invention the modulation of the growth and/or diversity of gut bacteria is measurable in infants stools, optionally measurable at or after 8 weeks of age.

In one embodiment of the invention the term "promoting and/or inducing a gut microbiota that is closer to infants fed exclusively with human breast milk" is further characterized by promoting and/or inducing a healthy growth, a healthy immune system and/or a healthy gut function, especially later in life.

The invention also comprises the use of the composition(s) herein described for inducing the health effect(s) described herein and above, especially in target groups described, more preferably in infants most susceptible to benefit from the health benefits.

**Target Infants**

In one embodiment, the infants or young children are born at term. In one embodiment, the infants or young children are born pre-mature (preterm). The target infants or young children are born with a fragile or unbalanced microbiota or dysbiosis of microbiota, wherein said infants are preterm infants, infants born small for gestational age or by Caesarean-section, hospitalized infants or infants treated or having been treated by antibiotics. In one embodiment, the infants or young children are delivered by Caesarean-section. It is foreseen that the composition of the invention may be even more beneficial to infants born with possibly impaired gut microbiota orfragile infants (such as prematurely born infants and/or infants born by C-section). It is also foreseen that the composition of the invention may be even more beneficial to infants exhibiting intestinal disorders (such as diarrhea, infections or colic) after birth, for example, during the first 4 weeks after birth.

In embodiments of the invention, said above conditions are targeted by the composition of the invention when the infants are 0-6 months of age. Without being bound by the theory, it is believed that younger infants benefit even more from the invention, especially when the infants have an "unbalanced intestinal microbiota" and/or have a fragile health condition (as exemplified by the conditions cited above).

In one embodiment, the infants and young children are 0-6- months, or 0-12 months or 0-36 months of age. It is foreseen that the composition of the invention may be even more beneficial to infants just after birth (0-4 weeks or 0-8 weeks) as their intestinal tract may be more fragile.

In such infants or young children, acquiring a gut microbiota that is close to the gut microbiota of breast fed infant (preferably exclusively breast fed infants) is of particular interest. Indeed it provides them with a multitude of health elements that can be beneficial, especially for those fragile infants.

**Intended Feeding regimen :**

In one embodiment, the composition of the invention is fed to the infant or young children (or intended to be fed or instructed to be fed) during 2, 4, 8, 12 weeks or during at least 2, 4, 8, 12 weeks. In preferable embodiments, it is fed (or intended to be fed or instructed to be fed) during the first 4, 8 or 12 weeks of the life of the infant. It is believed that starting early (at birth or close to birth) is preferred to induce the intended effect.

**Probiotics**

The composition of the invention can comprise probiotics. Preferably the probiotics help build a healthy gut microbiota. Most preferably the probiotics synergize with the oligofructose of the composition of the invention.

In one embodiment the probiotic *B. lactis* is commercial "BB12" available from CHr. Hansen, Denmark. In one embodiment the probiotic is *Bifidobacterium animalis spp. lactis (B. lactis) probiotic* is CNCM I-3446.

The dosage of probiotics can be for example between $10^5$ and $10^{12}$ cfu per gram of composition, preferably in an amount sufficient to deliver a synergistic effect with the oligosaccharides (e.g. OF) of the compositionof the present invention, and preferably between $10^6$ and $10^8$ cfu/g of composition.

**Proteins / Alpha-lactalbumin**

The composition of the invention comprises a source of protein. Such protein source can, for example, deliver between 1.6.cand 3 g protein/100kcal. In one embodiment intended for premature infants, such amount can be between 2.4 and 4 g/100kcal or more than 3.6 g/100kcal. In one embodiment, the amount can be below 2.0g per 100 kcal, e.g. in an amount below 1.8g per 100 kcal.

The type of protein is not believed to be of highest criticality to the present invention provided that the minimum requirements for essential amino acid content are met and satisfactory growth is ensured. However particular proteins can provide a most suitable substrate for the microbiota. Thus, protein sources based on whey, casein and mixtures thereof may be used as well as protein sources based on soy. As far as whey proteins are concerned, the protein source may be based on acid whey or sweet whey or mixtures thereof and may include alpha-lactalbumin and beta-lactoglobulin in any desired proportions.

Preferably the protein source is whey predominant (more than 50% of proteins are coming from whey proteins). In one embodiment, the protein of the composition are intact proteins or mostly (more than 90%) intact proteins.

The proteins may be intact or hydrolysed or a mixture of intact and hydrolysed proteins. By the term "intact" is meant that the main part of the proteins are intact, i.e. the molecular structure is not altered, for example, at least 80% of the proteins are not altered, such as at least 85% of the proteins are not altered, preferably at least 90% of the proteins are not altered, even more preferably at least 95% of the proteins are not altered, such as at least 98% of the proteins are not altered. In a particular embodiment, 100% of the proteins are not altered.

The term "hydrolysed" means in the context of the present invention a protein which has been hydrolysed or broken down into its component amino acids.

The proteins may be either fully or partially hydrolysed. It may be desirable to supply partially hydrolysed proteins (degree of hydrolysis between 2 and 20%), for example, for infants believed to be at risk of developing cow's milk allergy. If hydrolysed proteins are required, the hydrolysis process may be carried out as desired and as is known in the art. For example, whey protein hydrolysates may be prepared by enzymatically hydrolysing the whey fraction in one or more steps. If the whey fraction used as the starting material is substantially lactose free, it is found that the protein suffers much less lysine blockage during the hydrolysis process. This enables the extent of lysine blockage to be reduced from about 15% by weight of total lysine to less than about 10% by weight of lysine; for example about 7% by weight of lysine which greatly improves the nutritional quality of the protein source.

In one preferable embodiment, the proteins of the composition are hydrolysed, fully hydrolysed or partially hydrolysed. The degree of hydrolysis (DH) of the protein can be between 8 and 40, or between 20 and 60 or between 20 and 80 or more than 10, 20, 40, 60, 80 90. It is understood that hydrolysed proteins can have several effects on allergy: hydrolysed proteins can be less allergenic, hence triggering less immune allergic reactions. Hydrolysed proteins, especially small peptides (of lessthan 20, 10 or 5 amino acids), can induce oral tolerance hence influencing the future allergic status of the subject. It is understood that hydrolysed proteins can advantageously combine with the oligosaccharide(s) of the present invention by providing a dual effect, possibly synergistic effect by acting at least at 2 different levels in the establishment of allergic symptoms or allergic status.

In an embodiment of the invention at least 70% of the proteins are hydrolysed, preferably at least 80% of the proteins are hydrolysed, such as at least 85% of the proteins are hydrolysed, even more preferably at least 90% of the proteins are hydrolysed, such as at least 95% of the proteins are hydrolysed, particularly at least 98% of the proteins are hydrolysed. In a particular embodiment, 100% of the proteins are hydrolysed.

In one embodiment, the hydrolysed proteins are the sole source of protein (i.e. 100% or at least 90% of protein are hydrolysed).

In one embodiment, the hydrolysed proteins are the primary source of protein (i.e. at least 50%, preferably 60% of proteins are hydrolysed).

In one embodiment, the nutritional composition of the invention comprise alpha-lactalbumin in an amount of at least 0.2 or 0.3 or 0.4 g /100kcal or at least 1.7 g, or 2.0 or 2.3, or 2.6 g / L. The presence of alpha-lactalbumin in a certain amount is believed to enhance the effect of the oligofructose by providing, for example, an adequate nutritional substrate to the microbiota.

**Further Prebiotics:**

The composition of the invention can also comprise further non-digestible oligosaccharides (e.g. prebiotics). They are usually in an amount between 0.3 and 10% by weight of composition.

Prebiotics are usually non-digestible in the sense that they are not broken down and absorbed in the stomach or small intestine and thus remain intact when they pass into the colon where they are selectively fermented by potentially or known beneficial bacteria. Examples of prebiotics include certain oligosaccharides, such further fructo-oligosaccharides (FOS) and/or galacto-oligosaccharides (GOS). A combination of prebiotics may be used such as 90% GOS with 10% short chain fructo-oligosaccharides. Another combination of prebiotics is 70% short chain fructo-oligosaccharides and 30% inulin (= long chain FOS). Both, as well as oligofructose (OF), are available commercially, in particular from the company BENEO (Beneo GmbH, Maximilianstrasse, 68165, Mannheim, Germany).

**Preferred nutritional composition matrix:**

The composition according to the invention can be a synthetic nutritional composition. It can be an infant formula, a starter infant formula, a follow-on formula or a fortifier such as a human milk fortifier, or a supplement. Preferably the composition of the invention is an infant formula, or a fortifier or a supplement intended for the first 4 or 6 months of age.

**Fat / High *sn*-2 palmitate:**

The nutritional composition comprises triglycerides with high *sn*-2 palmitate, i.e. triglycerides having more than 33% of the palmitic acids in sn-2 position.

In one embodiment, the infant formula of this invention comprises about 5-6 g per 100 kcal of fat (triglycerides), with at least 8 wt% of this fat consisting of palmitic acid in the *sn*-2 position of a triglyceride. In the composition of the invention at least 8%, more preferably at least 9.6% of the fat is *sn*-2 palmitate.

In some embodiments, about 8.0-11.5 wt%, about 8.5-11.0% or about 9.0-10.0 wt% of the fat is palmitic acid in the *sn*-2 position of a triglyceride.

In some embodiments, palmitic acid comprises from about 15 to about 25%, such as from about 15 to about 20%, of the total fatty acids content of the formula, by weight, and at least from about 33%, for example, from about 35 to about 43% of the total palmitic acid content is in the *sn*-2 position.

In some embodiments, the infant formula further comprises at least one omega 6 fatty acid and at least one omega 3 fatty acid in a ratio of about 6 to about 1. In one embodiment, at least one omega 6 fatty acid comprises from about 10 to about 15% by weight of the total fatty acids and at least one omega 3 fatty acid comprises from about 1.2% to about 3.6% of the total fatty acids. In some embodiments, the infant formula comprises at least one omega 6 fatty acid present from about 2 to about 4% of the total weight and at least one omega 3 fatty acid present from about 0.3% to about 0.6% of the total weight.

The fat in the infant formula of this invention comprises a variety of triglycerides typically found in milk and/or infant formula. The most common fatty acid residues in the triglycerides are palmitic and oleic acids. Fatty acid residues in addition to oleic and palmitic acids that are present include, but are not limited to linoleic acid, alpha linolenic acid, lauric acid, myristic acid, docosahexaenoic acid, and arachidonic acid.

A commercially available composition sold by Lipid Nutrition is Betapol™ B-55, which is a triglyceride mixture derived from vegetable oil in which at least 54% of the palmitic acid is in the sn-2 position of the glycerol molecule. In one embodiment, the fat content of the composition of the invention is about 40-50% Betapol™ B-55 by weight, for example, from about 43% to about 45% by weight. Those skilled in the art will appreciate that the percentage of the high *sn*-2 fat used and the total amount of *sn*-2 palmitate in the formula may vary, and that a different high *sn*-2 palmitate oil maybe used, without departing from the scope of the invention.

Although feeding an infant a formula containing a high percentage of *sn*-2 palmitate helps to produce softer stools and growth of bifidobacteria in the colon, the combination of high *sn*-2 palmitate with oligofructose provides significantly superior stool softening while inducing an optimal gut microbiota balance in the colon of formula-fed infants.

The following examples are presented to illustrate certain embodiments and features of the present invention, but should not be construed as limiting the scope of this invention.

**Example 1:**

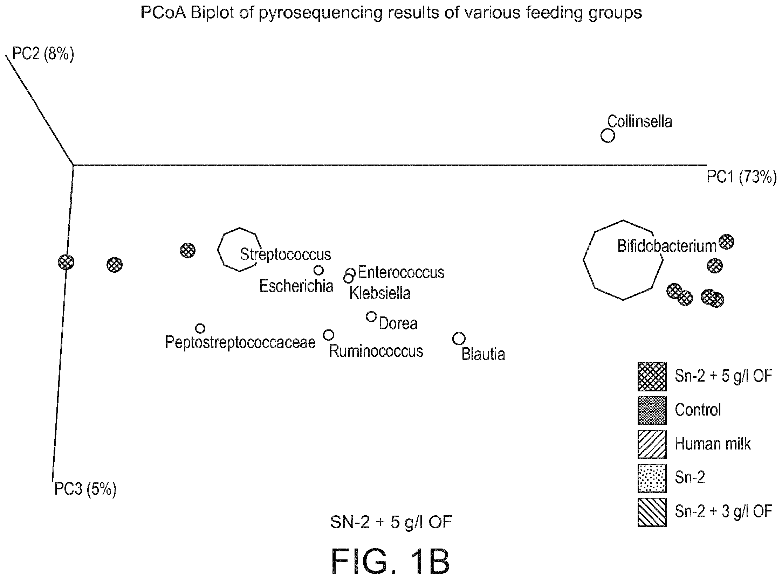

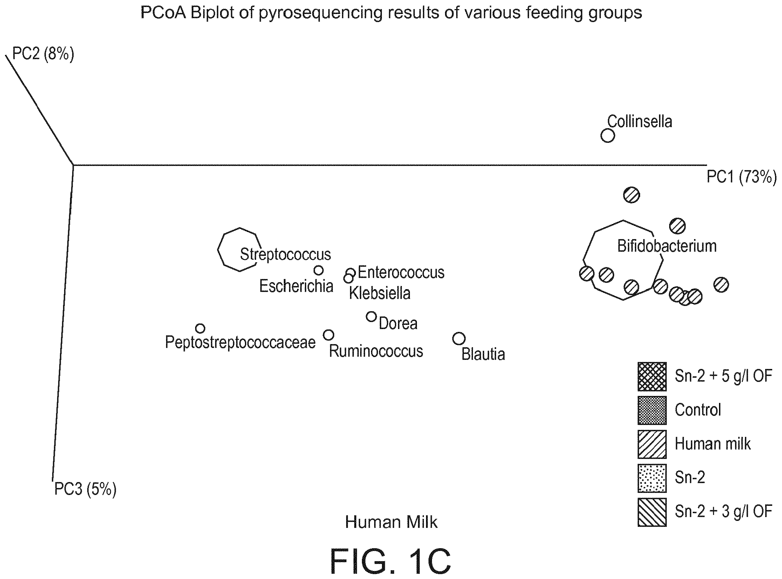

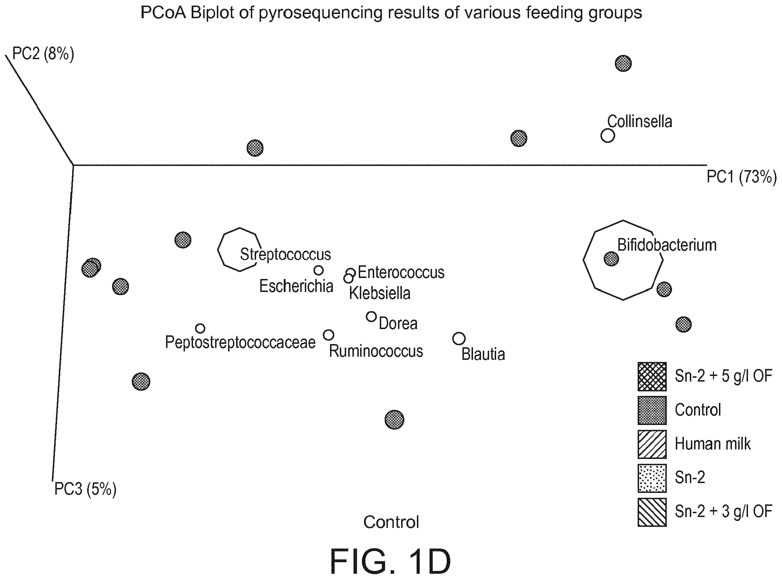

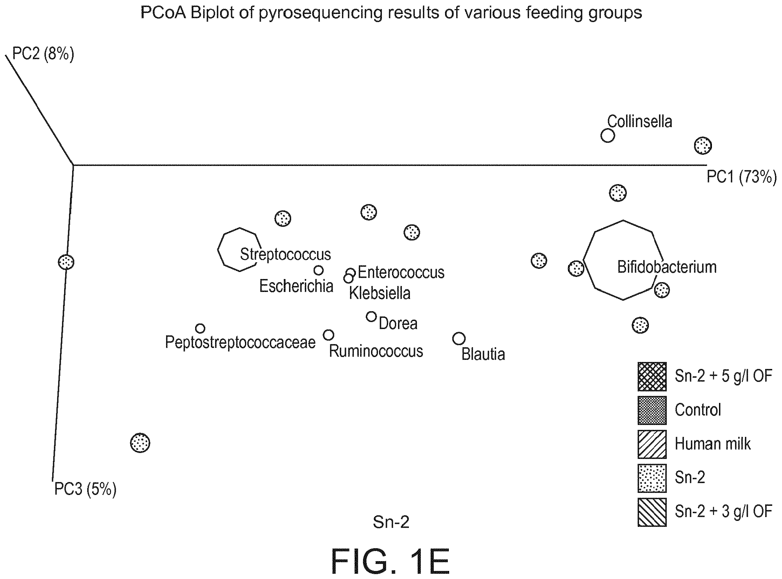

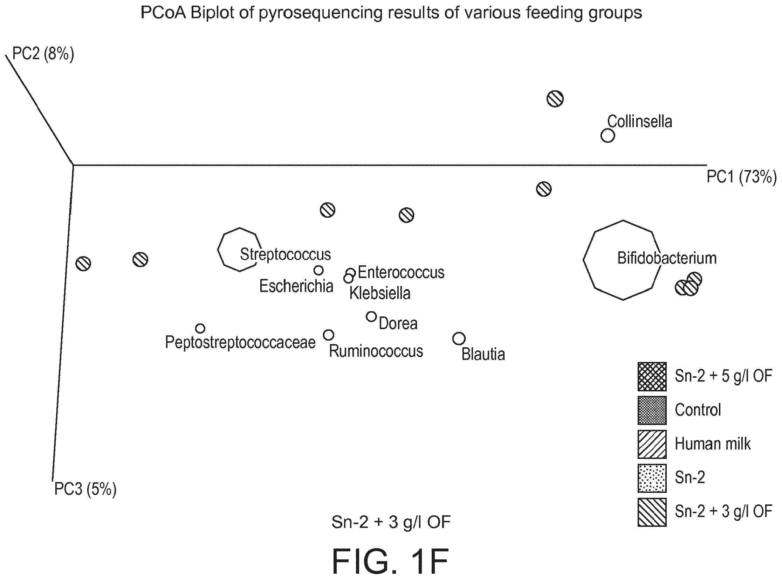

In the following experimental results the infant formula used were as follows. Composition 4 is an example of the invention, whereas compositions 1, 2 and 3 are not examples of the invention and are included for comparison purposes Compositions 1, 2, 3, 4 are used in the experiments of figures 1,2,3,4,5 and are respectively referenced as B, D, E, A :

<p style="text-align:center">"B=control" (composition 1);</p>

<p style="text-align:center">"D=sn-2" (composition 2),</p>

<p style="text-align:center">"E=sn-2 + 3g/L OF" (composition 3)</p>

<p style="text-align:center">"A = sn-2 + 5g/L OF" (composition 4).</p>

1. Control Formula (not a composition of the invention), coded "control formula".

As a ready-to-feed liquid infant formula, the Control Formula has 670 kcal / L. Ingredients are shown below:

| Ingredients | Per 100 Kcal | Per Liter |
|---|---|---|
| Total Protein (alpha-lactalbumin) | 2.0 g (0.3 g) | 13.4 g (2.3 g) |
| Total Fat (sn-2 palmitate) | 5.4 g (0.19 g) | 36g (1.3 g) |
| Total Carbohydrates | 11g | 73 g |

The Control Formula also includes essential amino acids, minerals and trace elements, nucleotides, and various optional ingredients and food additives commonly used in infant formula.

2. High sn-2 Formula (not a composition of the invention), coded "sn-2formula".

This formula is the same as the Control Formula, except that 9.6 wt % of the fat is sn-2 palmitate. This is accomplished by using fat that is 57% vegetable oil and 43% Betapol™ B-55 in which about 55% of the palmitic acid is in the sn-2 position. (Betapol is commercially available from Loders Croklaan, Hogeweg 1, 1521 AZ Wormerveer, P.O. Box 4, 1520 AA Wormerveer, The Netherlands)

3. High sn-2 + Oligofructose Formula A (not a composition of the invention) coded "sn-2 +3g/L OF formula".

This formula is the same as the High sn-2 Formula except that it includes 3.0 g/ L (0.4 g per 100 kcal) oligofructose.

4. High sn-2 + Oligofructose Formula B (composition of the invention), coded "sn-2 +5g/L OF formula".

This formula is the same as the High sn-2 Formula except that it includes 5.0 g/ L (0.7 g per 100 kcal) of oligofructose.
Importantly another example of a composition of the invention is the same formula without the Betapol ingredient (which brings 9.6 wt % of the fat as sn-2 palmitate).
A detailed listing of the ingredients of the compositions (1) "control formula", (2) "sn-2" formula, (3) "sn-2 + 3g/L OF formula" and (4) "sn-2 + 5g/L OF formula", is given in Table 1 below.

<p style="text-align:center">**Table 1**: Summary of the compositions</p>

| Per Liter | Units | Control formula | "sn2" formula | sn2+3g/L OF formula | sn2 + 5g/L OF formula |
|---|---|---|---|---|---|
| Energy | Kcal | 670 | 670 | 670 | 670 |
| Protein | g | 13.4 | 13.4 | 13.4 | 13.4 |
| Fat | g | 36 | 36 | 36 | 36 |
| %C16 at sn-2 | % total fat | 2.6 | 9.6 | 9.6 | 9.6 |
| Carbohydrate | g | 73 | 73 | 73 | 73 |
| Oligofructose | g | 0 | 0 | 3 | 5 |
| Vitamin A (RE) | mcg | 660 | 660 | 660 | 660 |
| Vitamin D | mcg | 10.6 | 10.6 | 10.6 | 10.6 |
| Vitamin E (TE) | mg | 7.4 | 7.4 | 7.4 | 7.4 |
| Vitamin K | mcg | 67 | 67 | 67 | 67 |
| Vitamin $B_1$ | mcg | 1000 | 1000 | 1000 | 1000 |
| Vitamin $B_2$ | mcg | 1100 | 1100 | 1100 | 1100 |
| Vitamin $B_6$ | mcg | 550 | 550 | 550 | 550 |
| Vitamin $B_{12}$ | mcg | 1.8 | 1.8 | 1.8 | 1.8 |
| Niacin | mcg | 5000 | 5000 | 5000 | 5000 |
| Folic Acid | mcg | 107 | 107 | 107 | 107 |
| Pantothenic Acid | mcg | 3500 | 3500 | 3500 | 3500 |
| Biotin | mcg | 20 | 20 | 20 | 20 |
| Vitamin C | mg | 90 | 90 | 90 | 90 |
| Choline | mg | 100 | 100 | 100 | 100 |
| Inositol | mg | 45 | 45 | 45 | 45 |
| Taurine | mg | 47 | 47 | 47 | 47 |
| Lutein | mcg | 25 | 25 | 25 | 25 |
| Carotenes | mcg | 210 | 210 | 210 | 210 |
| Calcium | mg | 420 | 420 | 420 | 420 |
| Phosphorous | mg | 240 | 240 | 240 | 240 |
| Magnesium | mg | 45 | 45 | 45 | 45 |
| Iron | mg | 8 | 8 | 8 | 8 |
| Zinc | mg | 6 | 6 | 6 | 6 |
| Manganese | mcg | 50 | 50 | 50 | 50 |
| Copper | mcg | 333 | 333 | 333 | 333 |
| Iodine | mcg | 100 | 100 | 100 | 100 |
| Sodium | mg | 160 | 160 | 160 | 160 |
| Potassium | mg | 650 | 650 | 650 | 650 |
| Chloride | mg | 433 | 433 | 433 | 433 |
| Selenium | mcg | 14 | 14 | 14 | 14 |
| Fluoride | mcg | 25 | 25 | 25 | 25 |
| Nucleotides | mg | 26 | 26 | 26 | 26 |
| CMP | mg | 13 | 13 | 13 | 13 |
| UMP | mg | 5.0 | 5.0 | 5.0 | 5.0 |
| AMP | mg | 4.0 | 4.0 | 4.0 | 4.0 |
| GMP | mg | 2.0 | 2.0 | 2.0 | 2.0 |
| IMP | mg | 2.0 | 2.0 | 2.0 | 2.0 |

**Example 2** - **Clinical study**

Design and General Overview

Data from an 8-week randomized controlled trial of healthy Filipino infants was used to compare gut microbiota outcomes among a subset of infants fed a control formula (Control), a high sn-2 palmitate formula (*sn*-2) or an identical formula with 3 g/L OF (*sn-2* + 3g/L OF) or 5 g/L OF (*sn*-2 + 5g/L OF), and a non-randomized HM-fed group. The study included 3 clinic visits (baseline, week4, and week 8) and 3 telephone calls (week 2, week 6, and a post-study follow-up call 2 weeks after the last clinic visit). At the baseline visit, participant demographics and household characteristics were collected. The present analysis focuses on a subset of 42 infants (9-12 per group) who provided stool samples at week 8 to be analysed for faecal microbiota composition and diversity using pyrosequencing of 16S rRNA genes.

The study was conducted at Mutinlupa Health Centre, Mutinlupa City, in the Philippines between April and September 2009. This study was conducted according to the guidelines laid down in the Declaration of Helsinki and all procedures involving human subjects/patients were approved by the National Ethics Committee and the Bureau of Food and Drug in the Philippines. Written informed consent was obtained from the parent or legal guardian of each infant.

**Participants**

Healthy, term (37-42 weeks gestation) singleton infants aged 7-14 days with weight-for-age ≥5th percentile according to Filipino reference standards were enrolled. Infants were required to be exclusively consuming and tolerating a cow's milk-based infant formula to be eligible for the formula-fed groups, or exclusively consuming HM to be eligible for the HM-fed group. Mothers were encouraged to breastfeed and were approached for participation in the formula-fed study arms only after the mother had made the decision to exclusively formula feed.

Infants were excluded from the study if they were presently receiving or had received medications which could potentially impact study endpoints; these included any medication known or suspected to affect fat digestion, absorption, and/or metabolism (e.g., pancreatic enzymes); any vitamin and/or mineral supplements which contain calcium; suppositories, bismuth-containing medications, herbal supplements, or medications that may neutralize or suppress gastric acid secretion. In addition, infants were excluded from the study if they were presently receiving or had received any antibiotics or antifungal medications (except topical) and HM-fed infants were excluded if their mothers were presently receiving or had received these medications post-partum.

Recruitment ended when the sample size goal was reached. The trial ended when the final subject completed all protocol requirements or withdrew from the study.

## Study Feedings

Formula-fed infants were randomized to receive *ad libitum* 1 of 4 formulas (i.e. compositions similar to the compositions of example 1): 1. a bovine milk-based, whey-predominant, alpha-lactalbumin-enriched term infant formula with a 100% vegetable fat blend (S-26 GOLD, Wyeth Nutrition, Askeaton, Ireland) ("Control"); 2. a high sn-2 palmitate formula (Control formula modified to contain 60% vegetable fat blend and 40% high *sn*-2 palmitate fat blend [Betapol™, Loders Croklaan, Wormerveer, the Netherlands]) ("*sn*-2"); 3. a high *sn*-2 palmitate formula supplemented with OF (Orafti® P95, BENEO-ORAFTI, Tienen, Belgium) at 3.0 g/L ("*sn*-2 + 3g/L OF"); 4. a high *sn*-2 palmitate formula supplemented with OF (Orafti® P95) at 5.0 g/L ("*sn*-2 + 5g/L OF"). Study formulas were produced in a powdered form and, except for the individual package number, were packaged in an identical manner. Instructions for formula preparation and storage were provided on the formula labels in both English and Filipino. All study formulas met Codex Alimentarius nutritional requirements for infant formula. Nutrient composition of the formulas has been previously described. Although the data presented here reflect a subset of the original trial, in the original study randomization was conducted using validated randomization software and infants were allocated to each of the 4 formula arms in approximately equal numbers, as follows: 75 infants to the Control formula, 74 infants to the sn-2 formula, 76 infants to the sn-2 + 3g/L OF formula, and 75 infants to the *sn*-2 + 5g/L OF formula. HM-fed infants (*n* 75) fed *ad libitum* were included as a nonrandomized reference group.

## Faecal Microbiota and Biochemistry

Stool samples were collected from a subset of infants at baseline (data not shown) and at week 8 clinic visits. Parents or legal guardians gave consent for the collection of these samples. At least 3 g of freshly passed stool was collected at the clinic by study personnel, using a scoop attached to the inner aspect of the lid of a sterile polypropylene vial, and immediately stored in a -20°C freezer. Frozen samples were shipped on dry ice to NIZO Food Research B.V., Ede, The Netherlands.

Fluorescent in situ hybridization (FISH) analysis was initially used to determine concentrations of bacterial groups (data not shown).

To investigate changes seen in faecal bacterial groups, an analysis of the gut microbiota was performed using barcoded pyrosequencing. With this technique, 16S rRNA molecules from the microbiota are PCR amplified and randomly sequenced.

DNA was extracted from fecal samples thawed at 4 degrees Celsius using the method previously described (Salonen A, Nikkila J, Jalanka-Tuovinen J, Immonen O, Rajilic-Stojanovic M, Kekkonen RA, Palva A, de Vos WM: Comparative analysis of fecal DNA extraction methods with phylogenetic microarray: effective recovery of bacterial and archaeal DNA using mechanical cell lysis. J Microbiol Methods 2010, 81(2):127-134.), with minor modifications. In short, approximately 0.2 g of faeces was used for mechanical and chemical lysis using 1.0 ml of lysis buffer (500 mM NaCl, 50 mM Tris-HCl (pH 8), 50 mM EDTA, 4% SDS) and 0.5 g of 0.1-mm zirconia beads. Nucleic acids were precipitated by addition of 260 $\mu$l of 10 M ammonium acetate, using one volume of isopropanol. Subsequently, DNA pellets were washed with 70% ethanol. Further purification of DNA was performed using the QIAamp DNA Stool Mini Kit (Qiagen, Hilden, Germany). Finally, DNA was dissolved in 200 $\mu$l Tris/EDTA buffer, and its purity and quantity were checked spectrophotometrically (ND-1000, NanoDrop Technologies, Wilmington, DE, USA).

For the preparation of the amplicon pool for pyrosequencing, the following universal primers were applied for amplification of the V3-V6 region of the 16S rRNA gene: a) forward primer,

5'-*CCATCTCATCCCTGCGTGTCTCCGACTAG*NNNNNN**ACTCCTACGGGAGGCAGCAG**-3'
(the italicized sequence is the 454 Life Sciences primer A, and the bold sequence is the broadly conserved bacterial primer 338F; NNNNNN designates the sample-specific six-base barcode used to tag each PCR product); b) reverse primer
5'-*CCTATCCCCTGTGTGCCTTGGCAGTCTCAG***CRRCACGAGCTGACGAC**-3'
(the italicized sequence is the 454 Life Sciences primer B, and the bold sequence is the broadly conserved bacterial primer 1061R). PCR amplification mixture contained: 1 μL faecal DNA, 1 μL bar-coded forward primer, 15 μL master mix (1 μL KOD Hot Start DNA Polymerase (1 U/μL; Novagen, Madison, WI, USA), 5 μL KOD-buffer (10×), 3 μL MgSO4 (25 mM), 5 μL dNTP mix (2 mM each), 1 μL (10 μM) of reverse primer) and 33 μL sterile water (total volume 50 μL). PCR conditions were: 95°C for 2 minutes followed by 35 cycles of 95°C for 20 s, 55°C for 10 s, and 70°C for 15 s. The approximately 750 bp PCR amplicon was subsequently purified using the MSB Spin PCRapace kit (Invitek) and the concentration was checked with a Nanodrop 1000 spectrophotometer (Thermo Scientific). A composite sample for pyrosequencing was prepared by pooling 200 ng of these purified PCR products of each sample. The pooled sample was purified using the Purelink PCR Purification kit (Invitrogen), with high-cutoff binding buffer B3, and submitted for pyrosequencing of the V3-V4 region of the 16S rRNA gene on the 454 Life Sciences GS-FLX platform using Titanium sequencing chemistry (GATC-Biotech, Germany).

**Statistical Analyses**

The population used for pyrosequencing analysis was a small subset of the PP population for faecal microbiota; the PP population consisted of formula-fed infants who received only study formula for the duration of the study, or HM-fed infants who consumed only HM; infants who completed all study visits through week 8; infants who had an available measurement at week 8 for the endpoint being analysed; and infants without any major protocol violations (e.g. infants who met the inclusion and exclusion criteria). Infants were excluded from the PP analysis population if they received medications which could potentially impact study endpoints (listed above), and HM-fed infants and formula-fed infants who had ever been breastfed were also excluded if their mothers had used these medications while the infants were being breastfed. The determination of whether the infant had violated the protocol and was excluded from the PP analysis was made before the study was unblinded. Raw sequence data were analyzed using Mothur v.1.33.0 (Schloss, P. D., et al. 2009. Applied and Environmental Microbiology 75(23): 7537-7541) and QIIME v.1.8 (Caporaso,J.G., et al. 2010. Nat Methods 7: 335-336) software packages. Pyrosequencing reads were denoised with the Mothur implementation of PyroNoise (Quince,C., Lanzen,A., Curtis,T.P., Davenport,R.J., Hall,N., Head,I.M. et al. 2009. Nat Methods 6: 639-641) according to the 454 SOP described in (Schloss,P.D. and Westcott,S.L. 2011. Appl Environ Microbiol 77: 3219-3226). Chimeras were identified using usearch61 in QIIME (Edgar,R.C., Haas,B.J., Clemente,J.C., Quince,C., and Knight,R. 2011. Bioinformatics 27: 2194-2200). The sequences were then trimmed as described in the Mothur 454 SOP in order to keep sequences overlapping the same 16S region. OTUs de novo picking at 97% identity was performed using uclust (Edgar,R.C. 2010. Bioinformatics 26: 2460-2461) in QIIME. Taxonomy assignment of OTU representative sequences used the RDP Classifier with confidence threshold of 0.5 (Wang,Q., Garrity,G.M., Tiedje,J.M., and Cole,J.R. 2007. Appl Environ Microbiol 73: 5261-5267) on the Greengenes reference database v.13.8 (McDonald,D., Price,M.N., Goodrich,J., Nawrocki,E.P., DeSantis,T.Z., Probst,A. et al. 2012. ISME J 6: 610-618) in QIIME. Diversity analyses were performed in QIIME and GraphPad Prism version 6.07 for Windows (GraphPad Software, La Jolla California USA). For the comparison of relative abundance of taxa between groups and to account for the skewed distributions, a non-parametric statistical test was performed using the Kruskal-Wallis test. Dunn's multiple comparisons test was used to correct for multiple testing. For all tests, a p-value significance threshold of 0.05 was used.

**RESULTS**

**Study population**

In the original study, three hundred formula-fed infants were randomized to receive Control, *sn*-2, *sn*-2 + 3g/L OF, or *sn*-2 + 5g/L OF. Seventy-five HM-fed infants were enrolled. In general, infants participating in PP analysis population (approximately 30-37 per feeding group) across the various feeding groups were generally similar on a variety of baseline characteristics, although HM-fed infants were slightly younger, more likely born via vaginal delivery, and less likely to be male or first born. Compared to the 375 infants in the full study, infants participating in the PP subset showed no major differences in baseline characteristics. The current analysis represents 42 infants (9-12 per group), which is a small but randomly selected subset of the 170 infants with stool samples at baseline and week 8 who comprised the PP analysis population.

The results of the study are illustrated by Figures 1 to 5 and the associated tables.

In the figures, the various bacterial populations are reported (population at week 8 of the study). The population counts and/or characterizations are reported for the 5 groups : "control" (not a composition of the invention), "sn-2" (not a composition of the invention), "*sn*-2 + 3g/L OF" (not a composition of the invention), human milk (infants fed human breast milk, not a composition of the invention) and "*sn*-2 + 5g/LOF" (composition of the invention). The statistically significant differences are indicated by the *P* values, when present, with a threshold of 0.05. In Figures 4 and 5, the relative counts of various bacterial sub-populations are reported as week 8 values (i.e., population at the end of the study).

**Figures 1** shows a biplot of the pyrosequencing data. The bacterial communities of the 5 groups were analyzed by PCoA ordination based on the weighted UniFrac. The coordinates of the ten most abundant bacterial genera (weighted average of the relative abundance in all samples) is indicated by grey bubbles with the names of the genera. The groups are separately displayed in panels A,B,C,D to better identify them. Human Milk (figure 1A) induces all the microbiota populations to be in the region of Bifidobacterium area (on the right side). Opposite to human milk, the infant formula control (figure 1C) show scattered bacterial populations with a majority close to the Streptococcus area. Similarly, figure 1D (*sn*-2) also exhibits bacterial populations not clustered in the Bifidobacterium zone. Figure 1B (*sn*-2 + 5g/L OF) clearly show that the bacterial population of this group are clustered close to the zone of Bifidobacteria, except for few samples still in the Streptococcus area. This is very similar to the group "human milk".

**Figure 2** quantifies what is displayed in figure 1 by evaluation the distribution of the weighted UniFrac distances between the experimental groups and the Human milk group.The UniFrac distance is a measure of the phylogenetic proximity of the bacterial populations. The A (composition of the invention), D (*sn*-2) and E (*sn*-2 + 3g/L OF) groups all show a smaller average distance compare to the B (Control) group. However, the smallest distance to group C (human milk) is associated to the A group (composition of the invention),

**Figure 3** shows the Shannon diversity index of the groups (i.e. how diverse the bacterial populations are in each sample). It illustrates that group A (composition of the invention) has a diversity index that is very similar to the index of the human milk group C. In addition, the A group is the only group showing a distribution of diversities statistically (t-test) different from the Control B group.

**Figure 4** shows the relative abundance of Bifidobacterium in the various experimental groups. It shows that the highest values are obtained for group C (human milk) and group A (composition of the invention).

**Figure 5** shows the relative abundance of Peptrostreptococcaceae in the various experimental groups (a non-desirable bacterial taxon). It shows that the lowest values are obtained for group A (composition of the invention) then group E (*sn*-2 + 3g/L OF), which are both statistically undistinguishable from the reference group C (human milk). A dose effect of the OF is observed with the addition of 3g/L OF (E) and 5g/LOF (A) over the D group (*sn*-2), which is still distinguishable from the group C (human milk).

## Claims

1. A nutritional composition for infants and young children comprising

   - an amount of at least 0.6 g oligofructose /100 kcal of said nutritional composition, or
   - an amount of at least 4 g/L of oligofructose when said composition is a ready-to-drink liquid composition, or
   - a sufficient amount of oligofructose to obtain at least 4 g/L of oligofructose in the reconstituted composition when said nutritional composition is a powdered or concentrated composition,
   wherein at least 90% of said oligofructose has a degree of polymerisation between 2 and 8, and
   wherein said composition comprises

      - less than 2 g oligofructose /100 kcal of said nutritional composition, or
      - less than 15 g/L of oligofructose when said composition is a ready-to-drink liquid composition, or
      - a sufficient amount of oligofructose to obtain respectively less than 15 g/L of oligofructose in the reconstituted composition when said nutritional composition is a powdered or concentrated composition, and

   wherein said composition comprises triglycerides with "high *sn*-2 palmitate", i.e. triglycerides having more than 33% of the palmitic acids in *sn*-2 position, and said composition comprises fat and at least 8% of said fat is "high *sn*-2 palmitate",
   for promoting or inducing a gut microbiota that is closer to the microbiota of infants fed exclusively with human breast milk,
   in infants or young children between 0 and 36 months of age,
   wherein said infants are born with a fragile or unbalanced microbiota or dysbiosis of microbiota, wherein said infants are preterm infants, infants born small for gestational age, infants born by Caesarean-section, hospitalized infants or infants treated or having been treated by antibiotics,
   wherein "promoting or inducing a gut microbiota that is closer to the microbiota of infants fed exclusively with human breast milk" comprises decreasing of the microbiota diversity to render it closer to the microbiota of infants fed exclusively with human breast milk, in comparison to the microbiota of infants fed predominantly with a conventional nutritional composition not comprising said oligofructose in said amount,
wherein said composition promotes the growth of bifidobacterial and down-regulates the growth of peptostreptococcaceae bacteria, wherein said promotion and down-regulation affect the relative abundance of said taxa of bacteria.

2. The composition of claim 1 wherein "promoting or inducing a gut microbiota that is closer to the microbiota of infants fed exclusively with human breast milk" comprises reducing the phylogenetic distance to the microbiota of exclusively breast fed infants such as to renders it closer to the microbiota of infants fed exclusively with human breast milk, in comparison to the microbiota of infants fed predominantly with a conventional nutritional composition not comprising said oligofructose in said amount.

3. The composition of any of the preceding claims **characterized in that** said composition is an infant formula or a follow-on formula.

4. The composition of any of the preceding claims **characterized in that** said composition comprises alpha-lactalbumin proteins in an amount of at least 0.3 g/100 kcal or 2.3 g/L of composition.

5. The composition of any of the preceding claims wherein said composition induces a diversity of the microbiota of less than 1.8, as measured by the Shannon diversity index.

6. The composition of any of the preceding claims **characterized in that** said modulation of the growth and/or diversity of gut bacteria is measurable in infant stools.

7. The composition of any of the preceding claims **characterized in that** said "promoting or inducing a gut microbiota that is closer to the microbiota of infants fed exclusively with human breast milk" is further **characterized by** promoting or inducing a gut microbiota that has a phylogenetic distance to the microbiota of breast fed infants of less than 0.30 units as measured by weighted Unifrac method.

**Patentansprüche**

1. Nährstoffzusammensetzung für Säuglinge oder Kleinkinder, umfassend

- eine Menge von mindestens 0,6 g Oligofructose/100 kcal der Nährstoffzusammensetzung oder
- eine Menge von mindestens 4 g/L Oligofructose, wenn die Zusammensetzung eine trinkfertige flüssige Zusammensetzung ist, oder
- eine ausreichende Menge von Oligofructose, um mindestens 4 g/L Oligofructose in der rekonstituierten Zusammensetzung zu erhalten, wenn die Nährstoffzusammensetzung eine pulverförmige oder konzentrierte Zusammensetzung ist,

wobei mindestens 90 % der Oligofructose einen Polymerisationsgrad zwischen 2 und 8 aufweisen und wobei die Zusammensetzung umfasst

- weniger als 2 g Oligofructose/100 kcal der Nährstoffzusammensetzung oder
- weniger als 15 g/L Oligofructose, wenn die Zusammensetzung eine trinkfertige flüssige Zusammensetzung ist, oder
- eine ausreichende Menge von Oligofructose, um jeweils weniger als 15 g/L Oligofructose in der rekonstituierten Zusammensetzung zu erhalten, wenn die Nährstoffzusammensetzung eine pulverförmige oder konzentrierte Zusammensetzung ist, und

wobei die Zusammensetzung Triglyceride mit "hohem *sn*-2-Palmitat" umfasst, d. h. Triglyceride, die mehr als 33 % der Palmitinsäuren in *sn*-2-Position aufweisen, und die Zusammensetzung Fett umfasst und mindestens 8 % des Fettes "hohes sn-2-Palmitat" ist,
zum Fördern oder Induzieren einer Darmmikrobiota, die näher an der Mikrobiota von Säuglingen liegt, die ausschließlich mit menschlicher Muttermilch gefüttert werden,
bei Säuglingen oder Kleinkindern zwischen 0 und 36 Monaten,
wobei die Säuglinge mit einer anfälligen oder unausgeglichenen Mikrobiota oder Dysbiose von Mikrobiota geboren sind, wobei die Säuglinge Frühgeborene, für das Schwangerschaftsalter klein geborene Säuglinge, durch Kaiserschnitte gehörende Säuglinge, in einem Krankenhaus behandelte Säuglinge oder Säuglinge, die durch Antibiotika behandelt werden oder wurden, sind,
wobei "Fördern oder Induzieren einer Darmmikrobiota, die näher an der Mikrobiota von Säuglingen liegt, die ausschließlich mit menschlicher Muttermilch gefüttert werden" ein Verringern der Mikrobiotadiversität umfasst, um es näher an die Mikrobiota von Säuglingen zu bringen, die ausschließlich mit menschlicher Muttermilch gefüttert werden, im Vergleich zu der Mikrobiota von Säuglingen, die überwiegend mit einer herkömmlichen Nährstoffzusammensetzung gefüttert werden, die die Oligofructose in der Menge nicht umfasst, wobei die Zusammensetzung das Wachstum von Bifidobakterien fördert und das Wachstum von Peptostreptococcaceae-Bakterien herunterreguliert, wobei die Förderung und die Herunterregulierung die relative Häufigkeit der Taxa von Bakterien beeinflussen.

2. Zusammensetzung nach Anspruch 1, wobei das "Fördern oder Induzieren einer Darmmikrobiota, die näher an der Mikrobiota von Säuglingen liegt, die ausschließlich mit menschlicher Muttermilch gefüttert werden" ein Reduzieren des phylogenetischen Abstands zu der Mikrobiota von ausschließlich gestillten Säuglingen umfasst, wie es näher an der Mikrobiota von Säuglingen zu bringen, die ausschließlich mit menschlicher Muttermilch gefüttert werden, im Vergleich zu der Mikrobiota von Säuglingen, die überwiegend mit einer herkömmlichen Nährstoffzusammensetzung gefüttert werden, die Oligofructose in der Menge nicht umfasst.

3. Zusammensetzung nach einem der vorstehenden Ansprüche, **dadurch gekennzeichnet, dass** die Zusammensetzung eine Säuglingsnahrung oder eine Folgenahrung ist.

4. Zusammensetzung nach einem der vorstehenden Ansprüche **dadurch gekennzeichnet, dass** die Zusammensetzung alpha-Lactalbuminproteine in einer Menge von mindestens 0,3 g/100 kcal oder 2,3 g/L der Zusammensetzung umfasst.

5. Zusammensetzung nach einem der vorstehenden Ansprüche, wobei die Zusammensetzung eine Diversität der Mikrobiota von weniger als 1,8 induziert, wie gemessen durch den Shannon-Diversitätsindex.

6. Zusammensetzung nach einem der vorstehenden Ansprüche **dadurch gekennzeichnet, dass** die Modulation des Wachstums und/oder der Diversität von Darmbakterien bei Säuglingsausscheidungen messbar ist.

7. Zusammensetzung nach einem der vorstehenden Ansprüche **dadurch gekennzeichnet, dass** das "Fördern oder Induzieren einer Darmmikrobiota, die näher an der Mikrobiota von Säuglingen liegt, die ausschließlich mit menschlicher Muttermilch gefüttert werden" ferner **gekennzeichnet ist durch** das Fördern oder Induzieren einer Darmmikrobiota, die einen phylogenetischen Abstand zu der Mikrobiota von gestillten Säuglingen von weniger als 0,30 Einheiten aufweist, wie gemessen durch gewichtetes Unifac-Verfahren.

**Revendications**

1. Composition nutritionnelle pour nourrissons et jeunes enfants comprenant

    - une quantité d'au moins 0,6 g d'oligofructose /100 kcal de ladite composition nutritionnelle, ou
    - une quantité d'au moins 4 g/L d'oligofructose lorsque ladite composition est une composition liquide prête à boire, ou
    - une quantité suffisante d'oligofructose pour obtenir au moins 4 g/L d'oligofructose dans la composition reconstituée lorsque ladite composition nutritionnelle est une composition en poudre ou concentrée,

        dans laquelle au moins 90 % dudit oligofructose a un degré de polymérisation entre 2 et 8, et
        dans laquelle ladite composition comprend

    - moins de 2 g d'oligofructose /100 kcal de ladite composition nutritionnelle, ou
    - moins de 15 g/L d'oligofructose lorsque ladite composition est une composition liquide prête à boire, ou
    - une quantité suffisante d'oligofructose pour obtenir respectivement moins de 15 g/L d'oligofructose dans la composition reconstituée lorsque ladite composition nutritionnelle est une composition en poudre ou concentrée, et

dans laquelle ladite composition comprend des triglycérides « à teneur élevée en sn-2 palmitate », c'est-à-dire des triglycérides ayant plus de 33 % des acides palmitiques en position sn-2, et ladite composition comprend de la matière grasse et au moins 8 % de ladite matière grasse est « à teneur élevée en *sn-2* », pour la promotion ou l'induction d'un microbiote intestinal qui est plus proche du microbiote de nourrissons alimentés exclusivement avec du lait maternel humain,

chez des nourrissons ou jeunes enfants d'un âge compris entre 0 et 36 mois,

dans laquelle lesdits nourrissons sont nés avec un microbiote fragile ou déséquilibré, ou une dysbiose du microbiote, dans laquelle lesdits nourrissons sont des nourrissons prématurés, des nourrissons nés petits pour l'âge gestationnel, des nourrissons nés par césariennes, des nourrissons hospitalisés ou des nourrissons traités ou ayant été traités par des antibiotiques,

dans laquelle la « promotion ou induction d'un microbiote intestinal qui est plus proche du microbiote de nourrissons alimentés exclusivement avec du lait maternel humain » comprend la diminution de la diversité du microbiote pour le rapprocher du microbiote de nourrissons nourris exclusivement au lait maternel humain, par comparaison avec le microbiote de nourrissons alimentés principalement avec une composition nutritionnelle classique ne comprenant pas ledit oligofructose en ladite quantité, dans laquelle ladite composition promeut la croissance de bifidobactéries et régulant à la baisse la croissance de bactéries peptostreptococcaceae, dans laquelle lesdites promotion et régulation à la baisse affectent l'abondance relative desdits taxons de bactéries.

2. Composition selon la revendication 1 dans laquelle la « promotion ou induction d'un microbiote intestinal qui est plus proche du microbiote de nourrissons alimentés exclusivement avec du lait maternel humain » comprend la réduction de la distance phylogénétique avec le microbiote de nourrissons nourris exclusivement au lait maternel de façon à le rapprocher du microbiote de nourrissons nourris exclusivement au lait maternel, par comparaison avec le microbiote de nourrissons alimentés principalement avec une composition nutritionnelle classique ne comprenant pas ledit oligofructose en ladite quantité.

3. Composition selon l'une quelconque des revendications précédentes **caractérisée en ce que** ladite composition est une préparation pour nourrissons ou une préparation de suite.

4. Composition selon l'une quelconque des revendications précédentes **caractérisée en ce que** ladite composition comprend des protéines alpha-lactalbumine en une quantité d'au moins 0,3 g/100 kcal ou 2,3 g/L de composition.

5. Composition selon l'une quelconque des revendications précédentes, dans laquelle ladite composition induit une diversité du microbiote inférieure à 1,8, telle que mesurée par l'indice de diversité de Shannon.

6. Composition selon l'une quelconque des revendications précédentes **caractérisée en ce que** ladite modulation de la croissance et/ou de la diversité de bactéries intestinales est mesurable dans des selles de nourrissons.

7. Composition selon l'une quelconque des revendications précédentes **caractérisée en ce que** ladite « promotion ou induction d'un microbiote intestinal qui est plus proche du microbiote de nourrissons alimentés exclusivement avec du lait maternel humain » est **caractérisée en outre par** la promotion ou induction d'un microbiote intestinal qui a une distance phylogénétique avec le microbiote de nourrissons nourris au sein inférieure à 0,30 unité telle que mesurée par le procédé Unifrac pondéré.

PCoA Biplot of pyrosequencing results of various feeding groups

FIG. 1A

EP 3 389 405 B1

PCoA Biplot of pyrosequencing results of various feeding groups

SN-2 + 5 g/l OF

FIG. 1B

EP 3 389 405 B1

PCoA Biplot of pyrosequencing results of various feeding groups

FIG. 1C

PCoA Biplot of pyrosequencing results of various feeding groups

FIG. 1D

EP 3 389 405 B1

PCoA Biplot of pyrosequencing results of various feeding groups

FIG. 1E

EP 3 389 405 B1

PCoA Biplot of pyrosequencing results of various feeding groups

FIG. 1F

EP 3 389 405 B1

# Weighted UniFrac distances

Group Distances

Ordered by distances

| Group 1 | Group 2 | t statistic | Parametric p-value |
|---|---|---|---|
| A vs. C | C vs. B | -4.045422513 | 0.00007 |
| A vs. C | C vs. D | -1.032720518 | 0.30299 |
| A vs. C | C vs. E | -0.690838465 | 0.49057 |
| C vs. D | C vs. B | -3.63447414 | 0.00034 |
| C vs. D | C vs. E | 0.301508035 | 0.76334 |
| C vs. E | C vs. B | -3.596287852 | 0.00040 |

A = sn-2 + 5 g/l OF
B = Control
C = Human milk
D = sn-2
E = sn-2 + 3 g/l OF

Table 2 – Weighted UniFrac distances statistics

FIG. 2

## Shannon diversity

A = Sn-2 + 5 g/l OF
B = Control
C = Human milk
D = sn-2
E = sn-2 + 3 g/l OF

## Table 3 – Shannon diversity statistics

| Group1 | Group2 | t stat | p-value |
|--------|--------|--------|---------|
| E | D | -0.75369758 | 0.57125 |
| C | E | -0.764756367 | 0.645714286 |
| A | D | -2.416821837 | 0.125 |
| A | B | -3.041972707 | 0.05 |
| A | E | -1.711016192 | 0.2625 |
| C | B | -1.720834481 | 0.316666667 |
| C | D | -1.439360157 | 0.382 |
| B | E | 0.992193983 | 0.578333333 |
| A | C | -0.551094678 | 0.642222222 |
| B | D | 0.101440001 | 0.926 |

## FIG. 3

EP 3 389 405 B1

# Bifidobacterium counts per group

**Bifidobacterium**

A = Sn-2 + 5 g/l OF
B = Control
C = Human milk
D = sn-2
E = sn-2 + 3 g/l OF

## FIG. 4

## Statistics of Bifidobacterium counts

| Table Analyzed | Bifidobacterium |
|---|---|
| Kruskal-Wallis test | |
| P value | 0.0360 |
| Exact or approximate P value? | Approximate |
| P value summary | * |
| Do the medians vary signif. (P < 0.05) | Yes |
| Number of groups | 5 |
| Kruskal-Wallis statistic | 10.28 |
| | |
| Data summary | |
| Number of treatments (columns) | 5 |
| Number of values (total) | 51 |

## FIG. 4A

## Statistics of Bifidobacterium counts

| Dunn's multiple comparisons test | Mean rank diff. | Significant? |
|---|---|---|
| A vs. B | 4.833 | No |
| A vs. C | -14.33 | No |
| A vs. D | 1.576 | No |
| A vs. E | 0.0 | No |
| B vs. C | -19.17 | Yes |
| B vs. D | -3.258 | No |
| B vs. E | -4.833 | No |
| C vs. D | 15.91 | No |
| C vs. E | 14.33 | No |
| D vs. E | -1.576 | No |

## FIG. 4B

## Peptostreptococcaceae counts per group

**Peptostreptococcaceae**

A = Sn-2 + 5 g/l OF
B = Control
C = Human milk
D = sn-2
E = sn-2 + 3 g/l OF

## FIG. 5

## Statistics of Peptostreptococcaceae counts

| Table Analyzed | Peptostreptococcaceae |
|---|---|
| **Kruskal-Wallis test** | |
| P value | < 0.0001 |
| Exact or approximate P value? | Approximate |
| P value summary | **** |
| Do the medians vary signif. (P < 0.05) | Yes |
| Number of groups | 5 |
| Kruskal-Wallis statistic | 26.90 |
| | |
| **Data summary** | |
| Number of treatments (columns) | 5 |
| Number of values (total) | 51 |

## FIG. 5A

## Statistics of Peptostreptococcaceae counts

| Dunn's multiple comparisons test | Mean rank diff. | Significant? |
|---|---|---|
| A vs. B | -22.79 | Yes |
| A vs. C | 2.167 | No |
| A vs. D | -17.42 | Yes |
| A vs. E | -6.444 | No |
| B vs. C | 24.96 | Yes |
| B vs. D | 5.367 | No |
| B vs. E | 16.35 | No |
| C vs. D | -19.59 | Yes |
| C vs. E | -8.611 | No |
| D vs. E | 10.98 | No |

## FIG. 5B

EP 3 389 405 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013068879 A2, Manjiang Yao
- WO 2016207061 A
- US 20130289110 A1

**Non-patent literature cited in the description**

- **GIBSON GR ; ROBERFROID MB.** Dietary modulation of the human colonic microbiota: introducing the concept of prebiotics. *J Nutr.,* 1995, vol. 125, 1401-12
- **SALMINEN S ; OUWEHAND A ; BENNO Y et al.** Probiotics: how should they be defined. *Trends Food Sci. Technol.,* 1999, vol. 10, 107-10
- **SALONEN A ; NIKKILA J ; JALANKA-TUOVINEN J ; IMMONEN O ; RAJILIC-STOJANOVIC M ; KEKKONEN RA ; PALVA A ; DE VOS WM.** Comparative analysis of fecal DNA extraction methods with phylogenetic microarray: effective recovery of bacterial and archaeal DNA using mechanical cell lysis. *J Microbiol Methods,* 2010, vol. 81 (2), 127-134
- **SCHLOSS, P. D. et al.** *Applied and Environmental Microbiology,* 2009, vol. 75 (23), 7537-7541
- **CAPORASO,J.G. et al.** *Nat Methods,* 2010, vol. 7, 335-336
- **QUINCE,C. ; LANZEN,A. ; CURTIS,T.P. ; DAVENPORT,R.J. ; HALL,N. ; HEAD,I.M. et al.** *Nat Methods,* 2009, vol. 6, 639-641
- **SCHLOSS,P.D. ; WESTCOTT,S.L.** *Appl Environ Microbiol,* 2011, vol. 77, 3219-3226
- **EDGAR,R.C. ; HAAS,B.J. ; CLEMENTE,J.C. ; QUINCE,C. ; KNIGHT,R.** *Bioinformatics,* 2011, vol. 27, 2194-2200
- **EDGAR,R.C.** *Bioinformatics,* 2010, vol. 26, 2460-2461
- **WANG,Q. ; GARRITY,G.M. ; TIEDJE,J.M. ; COLE,J.R.** *Appl Environ Microbiol,* 2007, vol. 73, 5261-5267
- **MCDONALD,D. ; PRICE,M.N. ; GOODRICH,J. ; NAWROCKI,E.P. ; DESANTIS,T.Z. ; PROBST,A. et al.** *ISME J,* 2012, vol. 6, 610-618